**Europäisches Patentamt**

**European Patent Office**

**Office européen des brevets**

(11) Numéro de publication : **0 381 552 B1**

# (12) FASCICULE DE BREVET EUROPEEN

(45) Date de publication du fascicule du brevet :
05.08.92 Bulletin 92/32

(51) Int. Cl.⁵ : **B60J 10/06**

(21) Numéro de dépôt : **90400182.3**

(22) Date de dépôt : **23.01.90**

(54) **Système de glace mobile affleurante pour porte d'automobile.**

(30) Priorité : **27.01.89 FR 8901054**

(43) Date de publication de la demande :
**08.08.90 Bulletin 90/32**

(45) Mention de la délivrance du brevet :
**05.08.92 Bulletin 92/32**

(84) Etats contractants désignés :
**AT BE CH DE ES GB IT LI LU NL SE**

(56) Documents cités :
**DE-A- 3 500 791**
**FR-A- 2 550 843**
**FR-A- 2 562 141**

(73) Titulaire : **ETABLISSEMENTS MESNEL SOCIETE ANONYME DITE :**
**9 et 11, Rue de la Rivière**
**F-78420 Carrières-Sur-Seine (FR)**

(72) Inventeur : **Mesnel, François**
**6 bis, Rue Salignac Fénelon**
**F-92200 Neuilly-Sur-Seine (FR)**
Inventeur : **Mesnel, Gérard**
**16, rue Victor Hugo**
**F-78420 Carrieres-Sur-Seine (FR)**

(74) Mandataire : **Jolly, Jean-Pierre et al**
**Cabinet Jolly 54, rue de Clichy**
**F-75009 Paris (FR)**

EP 0 381 552 B1

Jouve, 18, rue Saint-Denis, 75001 PARIS

## Description

La présente invention concerne un système de glace affleurante, notamment pour porte d'automobile.

On sait que la généralisation des portes d'automobiles constituées de deux panneaux emboutis, l'un extérieur, l'autre intérieur, assemblés par soudage, notamment à la périphérie des glaces, a entraîné une évolution des moyens de guidage, de coulissement et d'isolation phonique des glaces mobiles.

La mise au point de carrosseries sur lesquelles les filets d'air s'écoulent le long des surfaces extérieures, en provoquant le moins de tourbillons possibles, en vue d'augmenter le coefficient Cx de pénétration dans l'atmosphère des véhicules, a également amené les constructeurs à revoir les systèmes de glaces des portes d'automobiles et à réaliser, de préférence, des glaces mobiles qui affleurent la face externe de la porte et que l'on appelle pour cette raison des glaces "affleurantes", dites encore "flush-glass".

Afin de favoriser l'affleurement recherché de la glace, sans modifier sensiblement la construction de la carrosserie, et en vue de réduire de façon appréciable les bruits de route et d'air provenant de l'extérieur, lorsque le véhicule roule à grande vitesse, la Demanderesse a déjà proposé d'équiper des portes d'automobile de systèmes de glaces doubles, qui font l'objet de ses demandes de brevet français FR-A-2 604 660 et FR-A-2 604 661.

Une caractéristique essentielle de ce système réside dans le fait que la glace double coulisse sur la feuillure qui borde l'ouverture de la porte et qui résulte de la fabrication de celle-ci, alors qu'habituellement la glace coulisse dans un élément de guidage, pour venir s'y encastrer complètement en position fermée.

Avec un tel système de glace, du fait de l'utilisation de vitrages doubles, il est possible de disposer la vitre externe sensiblement dans le plan du panneau externe de la porte, en améliorant ainsi considérablement les caractéristiques aérodynamiques du véhicule.

En vue de réduire le coût de tels systèmes de glaces mobiles affleurantes à vitrage double, la Demanderesse a également proposé, dans sa demande de brevet français FR-A-2 627 540, déposé le 24 février 1988 et publié le 25 août 1989, d'utiliser une vitre simple, sur la face interne de laquelle est fixé, au voisinage de sa périphérie, un élément rigide continu, formant un cadre rapporté sur la vitre, cet élément rigide ayant une forme telle et/ou étant fixé de façon telle qu'il définit, avec les portions contiguës de la périphérie de la vitre, un canal à section transversale en U, apte à coiffer la feuillure de l'encadrement de vitre pour assurer le guidage et la fermeture étanche de la glace.

Un tel système s'est révélé très pratique à l'usage, mais il présente l'inconvénient, lorsqu'une vitre d'une porte avant est partiellement baissée, que la partie supérieure du cadre rapporté sur cette vitre est apparente et risque d'être placée dans le champ de vision du conducteur, en gênant celui-ci, lorsqu'il regarde le rétroviseur extérieur correspondant.

La présente invention vise à remédier à cet inconvénient en substituant au cadre continu rapporté sur la vitre un simple élément latéral, disposé sur la face interne de la vitre, à la partie supérieure de celle-ci, suivant un côté correspondant à un montant vertical de l'encadrement de vitre.

L'invention a par conséquent pour objet un système de glace affleurante mobile pour une porte d'automobile comprenant deux panneaux métalliques solidaires l'un de l'autre, entre lesquels cette glace mobile peut être escamotée, et un encadrement de glace issu desdits panneaux ou solidaire de ceux-ci, cet encadrement définissant avec les panneaux une ouverture destinée à être obturée par la glace mobile et comprenant, sur les côtés de l'ouverture autres que celui par lequel la glace peut être escamotée entre les panneaux, une feuillure faisant saillie en direction de l'ouverture, système dans lequel, sur la face interne de la vitre, à proximité d'un bord de celle-ci contigu à un montant vertical de l'encadrement et sensiblement au niveau de la tranche supérieure de cette vitre, est fixé au moins un élément rigide ayant une forme telle et/ou fixé sur la vitre de façon telle qu'il définit, avec la portion contiguë de la périphérie de la vitre, un canal à section transversale en U apte à coiffer un profilé en élastomère qui coiffe lui-même la feuillure de l'encadrement de porte, pour assurer latéralement le guidage et la fermeture étanche de la vitre, (système connu de DE-A-3 500 791), caractérisé en ce que la tranche de cette vitre, au moins à la partie supérieure de celle-ci, est disposée obliquement par rapport à ses faces, en formant un angle aigu avec la face interne, en regard d'une partie du profilé contre laquelle elle vient prendre appui en position de fermeture.

Dans la pratique, la tranche de la vitre aura le même profil suivant tous les côtés correspondant à la feuillure de l'encadrement de vitre et le profilé comportera, suivant tous ces côtés, une partie sur laquelle cette tranche prendra appui en position de fermeture. Cette partie du profilé aura par exemple une section transversale tubulaire, de façon à pouvoir se déformer lorsqu'elle sera sollicitée par la tranche de la vitre, de manière à assurer une meilleure étanchéité. Cette partie du profilé pourra aussi être en un matériau apte à se déformer sous la sollicitation de la vitre. Elle pourra aussi avoir simplement un profil complémentaire de la tranche de la vitre.

Les surfaces externes de la partie du profilé appelées à venir en contact avec la vitre seront de préférence revêtues d'une pellicule d'un matériau à faible coefficient de frottement, d'un tissu ou de fibres floquées, en vue de faciliter le glissement de la vitre au contact du profilé.

De façon connue en soi, le profilé comportera une armature métallique au moins partiellement noyée dans l'élastomère. Avantageusement, afin d'assurer le guidage de la vitre durant son déplacement, ce profilé sera équipé, du côté disposé vers l'intérieur du véhicule, d'un organe formant glissière, dans lequel sera engagée de manière à y coulisser librement une partie de l'élément rigide correspondant ou un patin solidaire de cet élément. L'organe formant glissière pourra être fixé sur le profilé par tout moyen connu dans la technique. Il pourra notamment comporter une semelle clipsée dans des gorges du profilé.

Naturellement, la vitre et le profilé entrant dans la constitution du système de glace mobile affleurante conforme à l'invention constituent d'autres objets de l'invention telle que définie dans les revendications.

Les dessins annexés, qui n'ont pas de caractère limitatif, illustrent des formes de mise en oeuvre de l'invention. Sur ces dessins :

La figure 1 est une vue schématique en perspective de l'extérieur d'une porte d'automobile équipée du système de glace mobile affleurante conforme à l'invention;

La figure 2a est une vue schématique en élévation de la glace de cette porte ;

La figure 2b est une vue partielle à plus grande échelle de l'intérieur, montrant la glace de cette porte ;

La figure 3 est une coupe de la glace fermée au niveau du montant supérieur de l'encadrement de vitre;

La figure 4 est une coupe suivant la ligne IV-IV de la figure 1 ;

Les figures 5 et 6 sont des vues analogues à la figure 3 de deux autres formes de réalisation de l'invention;

Les figures 7, 8 et 9 sont des vues analogues à la figure 4 de trois autres formes de réalisation de l'invention.

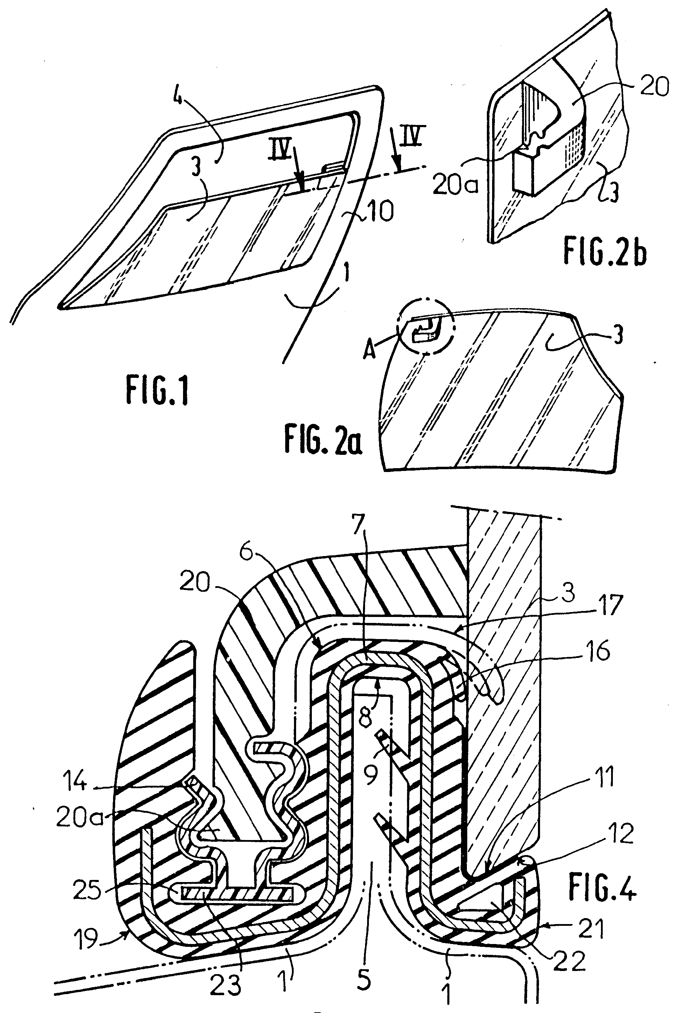

La porte représentée sur la figure 1 comprend deux panneaux emboutis assemblés tels que 1, entre lesquels peut s'escamoter de façon connue une glace 3. Les panneaux de la porte sont découpés pour définir une ouverture 4, que la glace 3 vient obturer en position relevée. L'encadrement de cette ouverture résulte de la soudure des panneaux pour former une feuillure 5, dont est solidaire un profilé 6 en élastomère, comportant une armature métallique 7 noyée dans l'élastomère. Une partie 8 à section en U de ce profilé coiffe la feuillure 5, dont elle est rendue solidaire par des languettes 9 faisant saillie en direction de cette feuillure à partir d'au moins une des branches du U. L'encadrement de porte présente un montant 10 sensiblement vertical.

Conformément à l'invention, la glace 3 comporte, fixé sur la face interne, à proximité de sa tranche supérieure et du montant vertical 10 de l'encadrement de porte, au moins un élément 20 à section en L, dont une partie est sensiblement parallèle à la glace 3, avec la bordure périphérique de laquelle elle définit un canal à section en U, dans lequel sont engagés la feuillure 5 et le profilé 6 qui la coiffe.

Au moins suivant sa tranche supérieure jusqu'à l'élément 20 (et, dans le cas du dessin, sur toute sa périphérie), la tranche 11 de la glace est taillée obliquement par rapport aux faces latérales, en formant un angle aigu avec la face interne, et elle vient prendre appui, en position fermée, dans une partie 21 de forme complémentaire du profilé 6, attenante à la branche de la partie 8 en U tournée vers l'extérieur du véhicule. La surface de cette partie 21 appelée à venir en contact avec la glace est revêtue d'une pellicule 12 d'un matériau à faible coefficient de frottement, ou d'un tissu, ou encore de fibres floquées, afin de faciliter le glissement de la glace. Pour permettre la déformation de la partie 21 du profilé contre laquelle prend appui la glace, cette partie comportera avantageusement un évidement tubulaire 22.

En vue d'assurer le guidage en position haute de la glace, la partie de l'élément 20 en L parallèle à la glace 3 comporte une extrémité 20a qui est profilée en forme de patin et qui est engagée de manière à pouvoir y coulisser dans une glissière 14 de forme complémentaire. Cette glissière 14 possède une semelle 23 clipsée dans des gorges 25 d'une partie 19 du profilé 6 attenante à la partie 8 à section en U. Cette partie 19 a elle-même un profil en U inversé par rapport à la partie 8 et c'est dans la base de cette partie 19 en U qu'est clipsée la semelle 23 de la glissière 14. La glissière 14 pourrait naturellement être fixée par tout autre moyen sur le profilé et l'élément 20 peut être monté coulissant par rapport à cette glissière de bien d'autres matières.

La partie supérieure du profilé 6 correspondant à la partie haute de la glace 3 est naturellement dépourvue de glissière. Dans le cas présent, la partie attenante à la branche de la partie 8 en U tournée vers l'intérieur du véhicule a une section tubulaire 25, mais elle pourrait naturellement avoir n'importe quelle autre forme.

De façon connue en soi, le profilé 6 comporte une lèvre 16 qui lèche la face interne de la glace 3. Cette lèvre 16 et la partie attenante du profilé comportent à leur surface un floc de fibres 17.

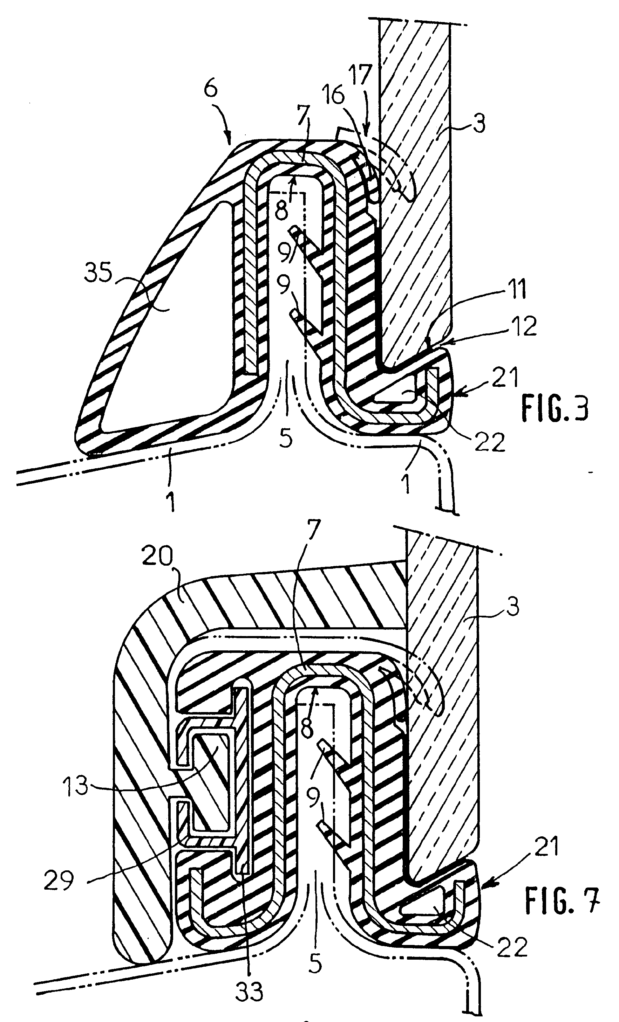

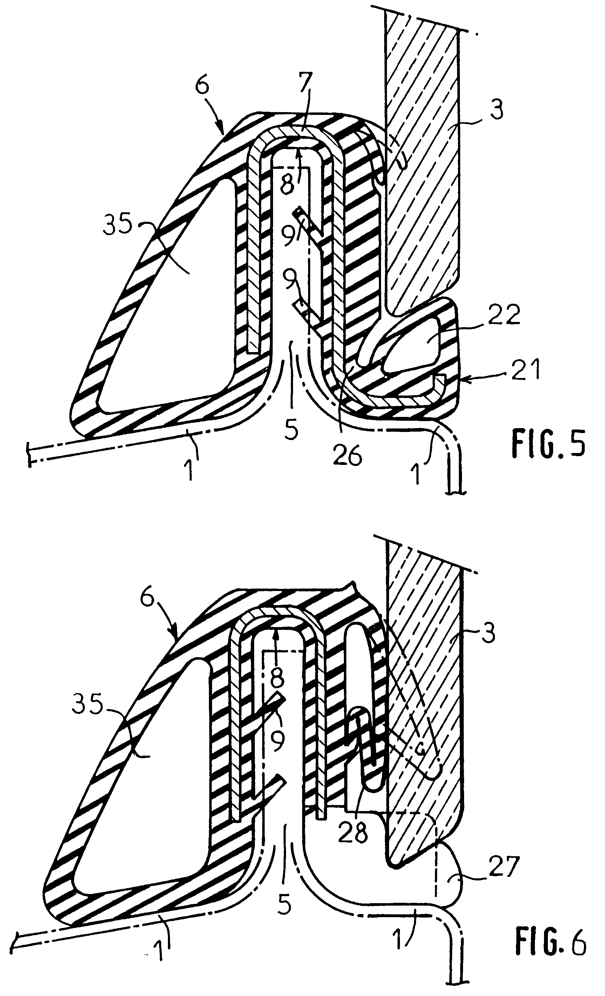

La variante de la figure 5, où les organes déjà décrits conservent les mêmes chiffres de référence, diffère simplement de la forme de réalisation de la figure 3 par le fait que, afin de pouvoir se déformer plus facilement et compenser ainsi les tolérances importantes de fabrication des carosseries, la partie 21 du profilé 6 comporte un évidement tubulaire 22 de section plus grande que précédemment et est raccordée à la branche contiguë de la partie 8 en U du profilé par une partie souple 26 formant charnière.

Dans la variante de la figure 6, où les organes déjà décrits sont désignés également par les mêmes chiffres de références, la partie 21 de la figure 5 sur laquelle prend appui la glace 3, est remplacée par une partie 27 en matière plastique expansée, qui peut ainsi se déformer sous la sollicitation de la glace. Dans cette variante, la branche de la partie 8 en U du profilé contiguë à la glace sollicite celle-ci vers l'extérieur par l'intermédiaire d'une partie tubulaire 28 en forme de bec.

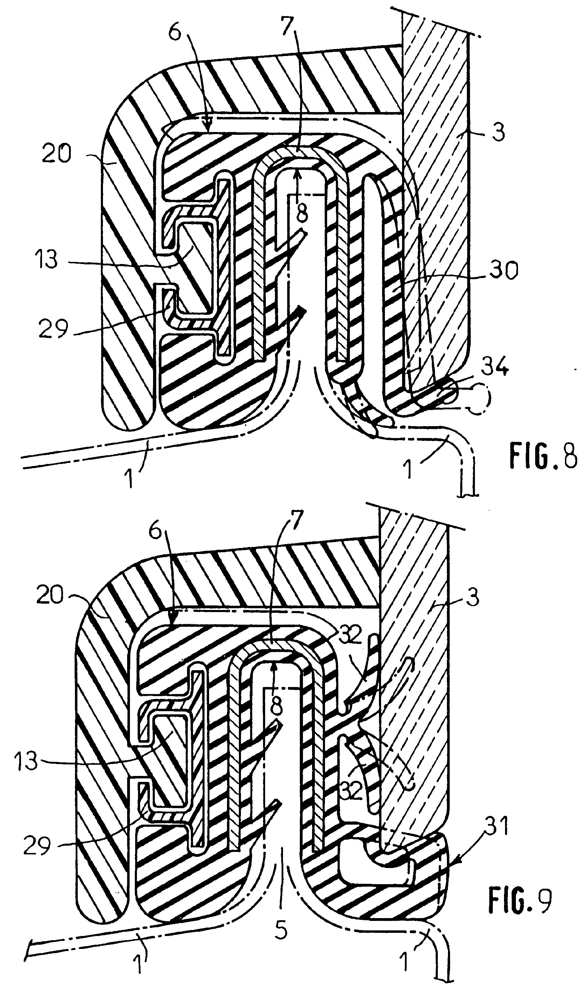

La figure 7 est une coupe analogue à la figure 4 d'une autre variante de l'invention. Sur cette figure, les organes déjà décrits conservent également les mêmes chiffres de référence. Dans cette variante, l'élément 20 à section en L comprend, sur sa face tournée vers la glace, un appendice 13, à section transversale en T, formant patin du guidage, qui est engagé de manière à pouvoir y coulisser dans une glissière 29 de profil complémentaire, solidaire de la branche de la partie 8 en U du profilé 6 tournée vers l'intérieur du véhicule. La glissière 29 pourra être fixée sur le profilé 6 par tout moyen connu dans la technique. Dans l'exemple du dessin, cette glissière comporte une semelle 33 dont les extrémités sont clipsées dans des gorges du profilé.

La figure 8 représente une autre variante analogue à celle de la figure 7, à cette seule différence près que la partie 21 du profilé sur laquelle prend appui la tranche de la vitre 3 est remplacée par une simple lèvre 34, de profil complémentaire de celui de la tranche de la vitre, attenante par une bande souple 30 à la base de la partie 8 en U du profilé, laquelle en position de fermeture de la vitre 3, vient s'appliquer contre la face contiguë de cette vitre, comme on le voit sur le dessin.

Enfin, dans la forme de réalisation de la figure 9, qui, elle aussi, est analogue à celle de la figure 7, en position de fermeture de la vitre 3, la tranche biseautée de celle-ci prend appui en la déformant contre une partie tubulaire 31 attenante à l'extrémité de la branche de la partie 8 en U du profilé tournée vers l'extérieur, tandis que des lèvres 32 attenantes à la partie médiane de cette même branche viennent s'appliquer contre la face contiguë de la vitre.

Dans toutes ces formes de réalisation, l'invention apporte donc un moyen simple et facile à mettre en oeuvre pour guider au cours de ses déplacements une glace mobile affleurante et pour assurer l'étanchéité au niveau de cette glace en position fermée de celle-ci.

## Revendications

1. Système de glace affleurante mobile (3) pour une porte d'automobile comprenant deux panneaux métalliques (1) solidaires l'un de l'autre, entre lesquels cette glace mobile peut être escamotée, et un encadrement de glace issu desdits panneaux ou solidaire de ceux-ci, cet encadrement définissant avec les panneaux une ouverture (4) destinée à être obturée par la glace mobile et comprenant, sur les côtés de l'ouverture autres que celui par lequel la glace peut être escamotée entre les panneaux, une feuillure (5) faisant saillie en direction de l'ouverture, système dans lequel, sur la face interne de la vitre (3), à proximité d'un bord de celle-ci contigu à un montant vertical (10) de l'encadrement et sensiblement au niveau de la tranche supérieure de cette vitre est fixé un élément rigide (20) ayant une forme telle et/ou fixé sur la vitre de façon telle qu'il définit, avec la portion contiguë de la périphérie de la vitre, un canal à section transversale en U apte à coiffer un profilé en élastomère (6) qui coiffe lui-même la feuillure (5) de l'encadrement de porte, pour assurer latéralement le guidage et la fermeture étanche de la vitre, tandis que la tranche (11) de cette vitre (3), au moins à la partie supérieure de celle-ci, est disposée obliquement par rapport à ses faces, en formant un angle aigu avec la face interne, en regard d'une partie du profilé contre laquelle elle vient prendre appui en position de fermeture.

2. Système selon la revendication 1, caractérisé en ce que la tranche (11) dans la glace inclinée obliquement par rapport aux faces de celle-ci s'étend sur tout le pourtour de cette glace.

3. Système selon l'une des revendications 1 et 2, caractérisé en ce que la partie (21, 29) du profilé (6) sur laquelle vient prendre appui la vitre (3) en position de fermeture a une forme complémentaire de celle de la tranche (11) de cette vitre.

4. Système selon l'une des revendications 1 à 3, caractérisé en ce que la partie (21, 31) contre laquelle prend appui la vitre (3) en position de fermeture a une section tubulaire.

5. Système selon l'une des revendications 1 à 3, caractérisé en ce que la partie (27) contre laquelle prend appui la vitre en position de fermeture est en un matériau déformable.

6. Système selon l'une des revendications 1 à 5, caractérisé en ce que les surfaces de la partie (11) du profilé appelées à venir en contact avec la glace (3) sont revêtues d'une pellicule d'un matériau à faible coefficient au frottement (12), d'un tissu ou de fibres floquées.

7. Système selon l'une des revendications 1 à 6, caractérisé en ce que le profilé (6) est équipé du côté disposé vers l'intérieur du véhicule d'une glissière (14, 29), dans laquelle est engagée, de manière à pouvoir y coulisser durant le déplacement de la glace, un patin (13) solidaire de l'élément rigide (20) ou une partie (20a) de cet élément (20).

8. Système selon l'une des revendications 1 à 7, caractérisé en ce que l'organe formant glissière (14, 29) est rendu solidaire du profilé (6) par clipsage dans des gorges (25) de ce profilé.

9. Vitre pour porte d'automobile, comportant sur une face, à proximité immédiate d'un bord latéral et d'une tranche contiguë à ce bord, un élément rigide (20), de forme telle ou fixé sur la vitre (3) de façon telle, qu'il définit avec la portion contiguë de la périphérie de celle-ci un canal en U, caractérisé en ce que ladite tranche contiguë (11), est disposée obliquement par rapport aux faces en formant un angle aigu avec la face portant ledit élément rigide (20).

10. Vitre selon la revendication 9, caractérisée en ce que sur une partie de l'élément rigide (20) tournée vers la glace est prévu un patin de guidage (13) ou en ce qu'une partie (20a) de cet élément est profilée en forme de patin de guidage.

11. Profilé en élastomère armé destiné à coiffer par une partie (8) à section en U une feuillure de l'encadrement de vitre d'une porte d'automobile, ce profilé comportant une partie attenante à une une branche de la partie (8) et de forme telle qu'elle puisse recevoir la tranche (11) d'une vitre inclinée par rapport à l'une de ses faces, lorsque cette vitre est en position de fermeture, caractérisé en ce que la branche de la partie à section en U destinée à être tournée vers l'intérieur du véhicule est équipée d'un organe creux formant glissière (14, 29) apte à recevoir pour le guider un patin (13) solidaire d'un élément rigide attenant à la vitre (3).

**Patentansprüche**

1. System eines bündig abschließenden beweglichen Fensters (3) für eine Automobiltür, bestehend aus zwei miteinander verbundenen Karosserieblechen (1) (Metallplatten), zwischen welchen diese bewegliche Fensterscheibe heraus- oder hineingeschoben werden kann, und einem Fensterrahmen, der aus besagten Blechen hervorgeht oder mit diesen verbunden ist, wobei dieser Rahmen mit den Blechen eine Öffnung (4) bildet, die dazu bestimmt ist, mit der beweglichen Fensterscheibe verschlossen zu werden, und wobei dieser Rahmen auf den anderen Seiten als den der Öffnung, durch welche die Fensterscheibe zwischen den Blechen heraus- oder hereingeschoben werden kann, einen Falz (5) aufweist, der in Richtung der Öffnung vorspringt, System, in welchem auf der inneren Oberfläche der Scheibe (3) in der Nähe einer Wand dieser, benachbart einer senkrechten Strebe (10) des Rahmens und im wesentlichen auf Höhe der oberen Kante dieser Scheibe, ein starres Element (20) befestigt ist, welches so geformt ist und/oder so auf der Scheibe befestigt ist, daß es zusammen mit dem benachbarten Teil der Scheibenoberfläche einen im Querschnitt U-förmigen Kanal bildet, der so ausgebildet ist, daß er ein Elastomerprofil (6) umschließt, welches selbst den Falz (5) des Türrahmens umhüllt, um seitlich die Führung und das dichte Schließen der Scheibe sicherzustellen, dadurch gekennzeichnet, daß die Kante (11) der Scheibe (3) zumindest in ihrem oberen Bereich schräg zu ihren Oberflächen angeordnet ist, wobei sie einen spitzen Winkel mit der Innenfläche bezüglich eines Teils eines Profils bildet, gegen den sie sich in geschlossener Position stützt.

2. System nach Anspruch 1, dadurch gekennzeichnet, daß sich die bezüglich der Oberflächen der Fensterscheibe schräg geneigte Kante (11) über den gesamten Umfang dieser Fensterscheibe erstreckt.

3. System nach einem der Ansprüche 1 und 2, dadurch gekennzeichnet, daß der Bereich (21, 29) des Profils (6), gegen den sich die Scheibe (3) in geschlossener Position stützt, eine Form komplementär zu jener der Kante (11) dieser Scheibe hat.

4. System nach einem der Ansprüche 1 bis 3, dadurch gekennzeichnet, daß der Bereich (21, 31), gegen den sich die Scheibe (3) in geschlossener Position stützt, einen röhrenförmigen Querschnitt hat.

5. System nach einem der Ansprüche 1 bis 3, dadurch gekennzeichnet, daß der Bereich (27), gegen den sich die Scheibe in geschlossener Position stützt, aus einem verformbaren Material besteht.

6. System nach einem der Ansprüche 1 bis 5, dadurch gekennzeichnet, daß die Oberflächen des Bereichs (11) des Profils, die dazu bestimmt sind mit der Scheibe (3) in Kontakt zu kommen, mit einer dünnen Schicht eines Materials mit geringem Reibungskoeffizienten (12) überzogen sind, mit Stoff oder mit geflockten Fasern.

7. System nach einem der Ansprüche 1 bis 6, dadurch gekennzeichnet, daß das Profil (6) auf der nach dem Fahrzeuginneren gerichteten Seite mit einer Führungsschiene (14, 29) versehen ist, in welcher ein mit dem starren Element (20) verbundener Gleitschuh (13) oder ein Teil (20a) dieses Elements (20) so im Eingriff ist, daß er während der Verschiebung der Scheibe darin gleiten kann.

8. System nach einem der Ansprüche 1 bis 7, dadurch gekennzeichnet, daß das die Führungsschiene (14, 29) bildende Organ mit dem Profil (6) mittels Klammern in den Nuten (25) dieses Profils verbunden ist.

9. Scheibe für Automobiltüren, die auf einer Seitenfläche in unmittelbarer Nähe eines seitlichen Randes und einer mit diesem Rand benachbarten Kante ein starres Element (20) aufweist, welches eine solche Form hat oder so auf der Scheibe (3) befestigt ist, daß es zusammen mit dem benachbarten Teil der Scheibenoberfläche einen U-förmigen Kanal bildet, dadurch gekennzeichnet, daß die besagte benachbarte Kante (11) schräg bezüglich der Seitenflächen angeordnet ist, wobei sie einen spitzen Winkel mit der Seitenfläche bildet, die das besagte starre Element (20) trägt.

10. Scheibe nach Anspruch 9, dadurch gekennzeichnet, daß auf einem Teil des starren Elements (20), das gegen die Scheibe gerichtet ist, ein Führungsgleitschuh vorgesehen ist, oder daß ein Teil (20a) dieses Elements als Führungsgleitschuh (13) ausgeformt ist.

11. Armiertes Elastomerprofil, das dazu bestimmt ist mittels eines Teils (8) mit U-förmigem Querschnitt einen Falz des Rahmens einer Scheibe einer Autotür zu umhüllen, wobei dieses Profil einen Teil beinhaltet, der an einen Schenkel des Teils (8) angrenzt, und der so geformt ist, daß er die bezüglich einer der Seitenflächen einer Scheibe geneigte Kante (11) aufnehmen kann, wenn diese Scheibe in geschlossener Position ist, dadurch gekennzeichnet, daß der Schenkel des U-förmigen Teils, der nach dem Wageninneren gerichtet ist, mit einem hohlen Organ versehen ist, das eine Führungsschiene (14, 29) bildet, die fähig ist, einen Gleitschuh (13) aufzunehmen, der mit einem an die Scheibe (3) angrenzenden starren Element verbunden ist.

## Claims

1. A movable flush glass system (3) for a motor vehicle door comprising two metal panels (1) which are fixed with respect to each other and between tich said movable glass can be retracted, and a glass frame structure formed by said panels or fixed with respect thereto, said frame structure defining with the panels an opening (4) intended to be closed by the movable glass and comprising, on the sides of the opening other than that by way of which the glass can be retracted between the panels, a rib (5) projecting in the direction of the opening, in which system, on the inward face of the window (3), in the vicinity of an edge thereof which is contiguous with a vertical upright (10) of the frame structure and substantially at the level of the upper edge of said window, there is fixed a rigid element (20) which is of a shape such and/or which is fixed on the window in a manner such that, with the contiguous portion of the periphery of the window, it defines a channel of a U-shaped cross-section arranged to fit over a profile portion (6) of elastomer which itself fits over the rib (5) of the door frame structure, to provide laterally for guidance and sealing closure of the window, characterised in that the edge (11) of the window (3), at least in the upper part thereof, is disposed obliquely with respect to its faces, forming an acute angle with the inward face, facing a part of the profile portion against which it comes to bear in the closure position.

2. A system according to claim 1 characterised in that the edge (11) of the glass which is inclined obliquely with respect to the faces thereof extends over the entire periphery of said glass.

3. A system according to one of claims 1 and 2 characterised in that the part (21, 29) of the profile portion (6) against which the window (3) comes to bear in the closure position is of a shape complementary to that of the edge (11) of said window.

4. A system according to one of claims 1 to 3 characterised in that the part (21, 31) against which the window (3) bears in the closure position is of a tubular section.

5. A system according to one of claims 1 to 3 characterised in that the part (27) against which the window bears in the closure position is of a deformable material.

6. A system according to one of claims 1 to 5 characterised in that the surfaces of the part (11) of the profile portion which are to come into contact with the glass (3) are covered with a film of a material with a low coefficient of friction (12), a fabric or flocked fibres.

7. A system according to one of claims 1 to 6 characterised in that the profile portion (6) is provided on the side which is disposed towards the interior of the vehicle with a slider (14, 29) in which a shoe (13) which is fixed with respect to the rigid element (20) or a part (20a) of said element (20) is engaged in such a way as to be capable of sliding therein during displacement of the glass.

8. A system according to one of claims 1 to 7 characterised in that the member forming the slider (14, 29) is fixed with respect to the profile portion (6) by clipping engagement into grooves (25) in the profile portion.

9. A window for a motor vehicle door comprising, on a face, in the immediate vicinity of a lateral edge and an edge face contiguous to said edge, a rigid element (20) which is of a shape such or which is fixed on the window (3) in a manner such that, with the contiguous portion of the periphery thereof, it defines a U-shaped channel, characterised in that said contiguous edge face (11) is disposed obliquely with respect to the faces, forming an acute angle with the face bearing said rigid element (20).

10. A window according to claim 9 characterised in that provided on a part of the rigid element (20) which is towards the glass is a guide shoe (13) or that a part (20a) of said element is of a configuration in the form of a guide shoe.

11. A profile portion of reinforced elastomer which is intended to fit by means of a part (8) of U-shaped section over a rib of a window frame structure of a motor vehicle door, said profile portion comprising a part adjoining a limb of the part (8) and of a shape such that it can receive the edge face (11) of a window which is inclined with respect to one of its faces ten said window is in the closure position characterised in that the limb of the part of U-shaped section which is intended to be directed towards the interior of the vehicle is provided with a hollow member forming a slider (14, 29) capable of receiving for guiding same a shoe (13) which is fixed with respect to a rigid element adjoining the window (3).

FIG.1

FIG.2a

FIG.2b

FIG.4

EP 0 381 552 B1

FIG.3

FIG. 7

8

FIG.5

FIG.6

EP 0 381 552 B1

FIG.8

FIG.9

10